# EUROPEAN PATENT SPECIFICATION

(11) **EP 1 776 874 B1**
(45) Date of publication and mention of the grant of the patent: **03.12.2008**
(21) Application number: 04808985.8
(22) Date of filing: 03.12.2004
(51) Int. Cl.: A23K 1/10, A23L 1/18

(54) **METHOD FOR PRODUCING A PROTEIN FORAGE SUPPLEMENT FROM A KERATIN-CONTAINING STOCK**
VERFAHREN ZUR HERSTELLUNG EINES PROTEINFUTTER AUS EINEM KERATINHALTIGEN ROHMATERIAL
PROCEDE DE PRODUCTION D'UN FOURAGE PROTEINE A PARTIR D'UNE MATIERE PREMIERE CONTENANT DE LA KERATINE

(30) Priority: 13.07.2004 RU 2004121126
(43) Date of publication of application: 25.04.2007
(73) Proprietor: XLN Technologies Agency Establishment, 9491 Ruggell (LI)
(72) Inventor: BRENNER, Valery Vladimirovich, Moscow, 113447 (RU); PETROVICHEV, Vladimir Alekseevich, Moscow, 125130 (RU); VOLIK, Viktor Grigorevich, Moskovskaya obl., 141552 (RU); MAZUR, Valentin Mitrofanovich, Moscow, 125438 (RU)
(74) Representative: Benatov, Emil Gabriel
(86) International application number: PCT/RU2004/000478
(87) International publication number: WO 2006/016831

(56) References cited:
- FR-A1- 2 241 257
- SU-A- 627 810
- SU-A- 967 453
- SU-A1- 1 103 384
- SU-A1- 1 757 580
- US-A- 4 292 334

## Description

### Field of the Invention

This invention relates to forage production and may be used at factories processing non-edible waste of livestock farming products.

### Prior Art

As a protein source for feeding poultry and livestock waste of keratin-containing stock is used, e.g., waste of poultry-processing industry; waste of poultry evisceration, such as feather, fluff, blood, heads, wings, giblets, etc.

Among waste of poultry evisceration almost 50% of proteins are contained in feather and fluff stock. Keratin is the main protein of feather. Apart from poultry feather, keratin is contained in horn and hoof stock of farm animals.

Keratin is highly stable to action of various agents, e.g., water, esters, alcohols, salt solutions, weak acids, to action of light, heating; it does not break up by enzymes contained in the digestive juices of human beings, animals and poultry, is not practically digestible, therefore methods of processing keratin-containing stock are aimed at transferring keratin from the non-digestible to a digestible form.

The commonly used methods of processing keratin-containing stock are subdivided into:
hydrothermal treatment;
acid, alkaline and enzymatic hydrolysis.

Hydrothermal methods of processing keratin-containing stock are known in the art. One should take into account that hydrolysis of keratin in an aqueous medium is most efficient at a temperature above 150°C (Vestnik Selskokhozyaistvennoy Nauki, 1980, No. 12, p.119-121).

A method of processing feather-fluff stock at 185°C in special high-pressure vessels (0.8 - 1.0 MPa) until full dissolution is known in the art (FR 2241257).

Such closed apparatus for batch operation are very expensive and relate to equipment subjected to boiler inspection. They are not of wide practical use.

A method of processing keratin-containing stock into animal forage is also known, which comprises hydrolysis of stock by water-heat treatment. Stock is comminuted before hydrolysis, hydrolysis is carried out at 120 - 140°C for 20 - 40 minutes with subsequent extrusion at a pressure ranging from 4.0 - 5.0 MPa for 15 - 30 seconds (SU 1757580).

Disadvantages of the above methods are that: extrusion is possible only if the moisture content of stock does not exceed 35%, steam consumption during heat treatment is high, the processes are time-consuming and biological value of the obtained product is reduced greatly. Apart from this, the processes are long, since each treatment requires extra time, and time of treatment (ranging from 6 to 12 hours) results in thermal denaturation of proteins, destruction of amino acids and formation of cyclopentides that are unavailable for action of enzymes in the gastrointestinal tract of animals and poultry.

A method of producing a meat-meal is known that comprises alternative cycles of mechanical compression of stock with simultaneous comminution and heat treatment of stock and vacuumization (SU 627810). But it is impossible to obtain a forage product from feather with this method, since it lacks a mechanism of feather fine comminution.

The closest method of feather processing is a method for producing a forage supplement from keratin-containing stock, which comprises heating and comminution of feedstock, sterilization and drying (US 4203892). According to this method, feather is subjected to moisture-heat treatment at 180 - 240°C for 2 - 10 minutes and is quickly transferred to a low-pressure environment.

Feather hydrothermal hydrolysis and sterilization occurs.

However, this method also has disadvantages, in particular expensive equipment and high power consumption.

### Summary of the Invention

The objective of this invention is to simplify the technological process, reduce costs, improve the quality of a protein supplement and avoid using additional chemical agents.

The stated objective is achieved due to that the inventive method for producing a forage supplement from keratin-containing stock comprises heating and comminution of feedstock, sterilization and drying, where feedstock with an initial moisture content of 35 - 95% is used, then it is further compacted and heated in the channel of a mixer comminutor at continuous feeding, pressure ranging from 0.4 to 10.0 MPa and stock temperature ranging from 60 to 120°C; then stock is subjected to hydrothermal treatment at 150 - 250°C for 5 - 300 seconds with simultaneous fine comminution and abrasion, and then the processed stock is taken out into an atmospheric pressure area.

Further, the processes of fine comminution and water hydrolysis of keratin are combined and carried out in a thin layer with a thickness up to 20 millimeters.

### Description of a Preferred Embodiment

The inventive method is carried out as follows.

Wet feather, after separation of excess water necessary for transportation of feather from a slaughter floor with the use of a screen separator (feather moisture content is about 50%), is fed to a header bin in various directions by screws.

Feather, captured by screws, is fed to the channel having a form generated by two or more crossing parallel cylinders.

The channel walls are heated by a heat-transfer agent. Water contained in feather boils in the near-wall layer. Vapor immediately runs through the feather thickness, condenses in the depth of the feather mass and, thus, transfers heat to the depth due to transfer of the latent heat of vaporization. Condensate comes back to the wall and evaporates again.

Simultaneously with heating the screws abrade feather, comminute and compact it gradually. When feather is heated, its mechanical strength is reduced significantly, this makes its comminution easier.

Feather is compacted by changing (reducing) the screw capacity. In order to obtain a reliable lock in the channel it is necessary to reduce the screw capacity, as compared to their capacity in the header bin, 6-8 times.

Apart from this, in the area of maximum pressure shafts are provided with screws with opposite direction of threads, i.e. with screws acting in the opposite direction.

The channel area, where maximum compaction of feather takes place, is determined in such a way that the feather temperature in this area would not be higher than 60 - 120°C.

Obtaining a lock enables to increase the temperature of feather, comminute it, raise the pressure further. Apart from this, the screws perform the transportation function, namely move feather (stock) within the channel, at preset parameters: temperature 150 - 250°C, pressure 0.4 MPa - 10.0 MPa. Prior to exiting the channel the stock should be contained in the channel with preset parameters at least for 5 - 300 seconds, because this corresponds to the reaction time of feather hydrolysis. If the parameters of temperature, pressure and time are decreased or increased, the technical effect cannot be achieved.

In order to improve heating, the screw in the final section of the plant is made with hollow threads within which a heated heat-transfer agent flows.

The three sections of the plant enable to separate the functions, simplify the design and the production technology.

The first section is the gripping bin with screws carrying out preliminary comminution and preliminary heating.

The second section is for further heating, compaction for obtaining a reliable lock, and for more uniform comminution of feather.

The third section is for comminution of feather, its heating and maintenance of a preset time of high-temperature water hydrolysis.

The three sections are made as similar channels having the form generated by two or more crossing parallel cylinders, within which screws rotate. In the first section the screws rotate in opposite directions, in the second and the third sections the screws rotate in one direction.

In the end of the third section a valve is located - a device enabling to take out processed feather from the area of high pressure and temperature to the receiving container with the atmospheric pressure. This device is a displacement pump which prevents liquid from boiling in the channel and, thus, prevents temperature from rising.

After processing a friable, finely comminuted fraction (powder) is obtained, which may be used for feeding poultry and animals without additional drying.

Without simultaneous heating, the comminuting power was 90 kW. If heating jackets are installed in the working area and stock is heated to 100°C, the comminution process was carried out with the power consumption of 7 kW, and if stock was heated to 180°C the power consumed by the engine was reduced 13-15 times.

The results of the sterilizing effect are shown in Table 1.

**Table 1. Dynamics of total seeding of poultry evisceration technical waste at different processing modes**

| No. | Type of stock, heating time, sec | Total seeding, 1·10⁶ CFU/g | | | | | | |
|---|---|---|---|---|---|---|---|---|
| | | Temperature, °C | | | | | | |
| | | 100 | 110 | 120 | 130 | 140 | 150 | 160 |
| | Feather-fluff waste | | | | | | | |
| 1 | 0 | 17,300 | | | | | | |
| 2 | 10 | 11,500 | 5,300 | 910 | 6.3 | 0.3 | 0.1 | 0.01 |
| 3 | 20 | 6,800 | 1,150 | 0.1 | 0.05 | 0.01 | 0.001 | 0.001 |
| 4 | 30 | 780 | 210 | 0.03 | 0.01 | 0.001 | - | - |
| 5 | 40 | 3.5 | 1.7 | 0.01 | 0.001 | - | - | - |
| 6 | 50 | 0.9 | 0.1 | - | - | - | - | - |
| 7 | 60 | 0.1 | 0.01 | - | - | - | - | - |

It can be seen from the Table that industrial sterility of poultry evisceration waste can be achieved at 140 - 160°C after heating for 10 - 20 seconds.

Short-time treatment at 150 - 180°C does not impair the fat quality and ensures full preservation of essential amino acids. Most sensitive to heat treatment is lysine.

Therefore, the parameter of available lysine content was chosen as a test for thermal stability of proteins from evisceration waste after high-temperature short-time treatment.

Table 2 shows the study results on influence of high-temperature heating (160 - 180°C) time on available lysine content in a feather paste-like slurry.

**Table 2. Available lysine content depending on time of high-temperature heating**

| No. | Specimen designation | Heating time, sec | Available lysine content, % |
|---|---|---|---|
| 1 | Feather specimen 1 | 0 | 100 |
| 2 | Feather specimen 2 | 180 | 80.0 |
| 3 | Feather specimen 3 | 300 | 63.8 |
| 4 | Feather specimen 4 | 420 | 42.2 |
| 5 | Feather specimen 5 | 1,200 | 36.8 |

According to literature sources, reduction of heating time to less than 5 minutes increases the available lysine content to 80% of the initial value.

The study results on digestibility of the final product versus heating temperature are shown in Table 3.

**Table 3. Digestibility of the final product versus heating temperature**

| No. | Specimen designation | Heating temperature, °C | In vitro digestibility, % |
|---|---|---|---|
| 1 | Feather specimen 1 | 130 | 23/1 |
| 2 | Feather specimen 2 | 150 | 35/5 |
| 3 | Feather specimen 3 | 170 | 73.8 |
| 4 | Feather specimen 4 | 190 | 80.2 |
| 5 | Feather specimen 5 | 210 | 80.8 |

The study results on vapor pressures in the working area are shown in Table 4.

**Table 4. Digestibility of the final product versus pressure in the working area**

| No. | Specimen designation | Vapor pressure in the working area, MPa | In vitro digestibility, % |
|---|---|---|---|
| 1 | Feather specimen 1 | 0.3 | 23.1 |
| 2 | Feather specimen 2 | 0.5 | 62.2 |
| 3 | Feather specimen 3 | 0.7 | 73.8 |
| 4 | Feather specimen 4 | 1.0 | 79.0 |
| 5 | Feather specimen 5 | 1.6 | 80.3 |
| 6 | Feather specimen 6 | 3.0 | 81.1 |

Optimal parameters of the feather product after hydrothermal treatment (in vitro digestibility 80/3%) were obtained at heating temperature 180°C, pressure 1.6 MPa and processing time 90 seconds.

Further studies were conducted on the above specimen.

The study results on chain-length distribution show that after high-temperature short-time treatment protein compounds are affected by hydrolysis processes to a significantly greater degree than after hydrothermal treatment according to the commonly used technology.

Specimens of a feeding meal and a hydrolyzed feather powder, which were produced according to the common technology, were taken as control specimens.

The results are shown on Illustration 1.
1) Feeding meal according to GOST 17536-82
2) Protein supplement from technical waste
3) Hydrolyzed feather powder according to GOST 17537-82
4) Protein supplement produced from feather by the inventive method.

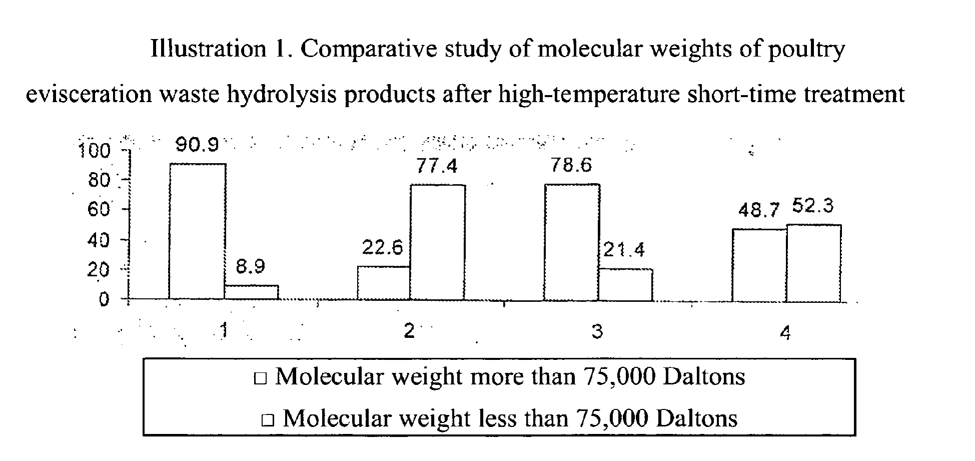

The obtained data are correlated with biological assessment results and results published by US companies Wenger and Insta Pro.

After high-temperature short-time treatment of feather it is recommended to conduct additional enzymatic treatment.

In such a case digestibility of the feather protein supplement increases to 92 -96%.

Studies were conducted on determining relative biological value with a microbiological method; the results are shown in Table 5.

**Table 5. Relative biological value (RBV) of forage products made from feather (microbiological method)**

| No. | Specimen designation | In vitro digestibility, % | Number of infusoria in 1 mL*10⁴ | RBL, % vs. casein |
|---|---|---|---|---|
| 1 | Casein (control) | - | 27.0 | - |
| 2 | Feather powder according to GOST 17536-82 | 28.0 | 12.8 | 46.3 |
| 3 | Feather protein supplement (experiment) | 80.5 | 24.8 | 92.0 |

The study results on *tetrachimena piriformis* show that relative biological value (RBV) of the feather protein supplement (experiment) is 2 times higher than that of a traditional meal according to GOST 17536-82.

Studies were conducted on determining biological values of protein forage supplements for growing rats (Table 6).

Rats from control groups were fed with hydrolyzed feather powder (Group 4) produced according to the traditional technology.

Rats from experimental groups were fed with the feather protein supplement (Group 5) produced with high-temperature short-time treatment (HTST).

**Table 6. Biological values of forage products from technical waste after high-temperature short-time treatment (for growing rats)**

| Groups by product | Consumed, g/head | | Weight gain, g | NPR | NPU, % |
|---|---|---|---|---|---|
| | Forage | Protein | | | |
| Casein | 97.01 | 11.58 | 38.66 | 3.62 | 59.38 |
| Feather powder according to GOST 17536 (control) | 53.08 | 5.59 | 4.86 | 1.45 | 25.76 |
| Feather protein supplement HTST*(experiment) | 63.87 | 7.30 | 17.16 | 2.80 | 46.73 |

Net protein ratio (NPR) and net protein usage (NPU) of the feather protein supplement in the experimental group were 2.80 and 46.73%. For the control group these indices were 1.45 and 25.76%. The results show that high-temperature short-time treatment enables to produce forage products from poultry evisceration waste, which biological values are almost 2 times higher (according to NPR and NPU) than for products made according to the traditional technology.

Results of feeding broilers with the protein supplement are shown in Table 7.

**Table 7. Zootechnical data on usage forage products made of feather**

| No. | Indices | Control group | Experimental group 1 (dry supplement) | Experimental group 2 (paste-like supplement) |
|---|---|---|---|---|
| 1 | Live weight at the day age, grams | 41.5 | 41.6 | 41.7 |
| 2 | Live weight at the age of 49 days, grams | 2,117 | 2,243 | 2,160 |
| 3 | Average daily weight gain, grams | 42.3 | 44.9 | 44.9 |
| 4 | Forage consumption per 1 kg of live weight gain, kg | 2.43 | 2.31 | 2.17 |
| 5 | Forage consumption per head, kg | 5.04 | 5.08 | 4.77 |
| 6 | Fish flour consumption per head during fattening period, grams | 231.7 | 57.6 | 75.6 |
| 7 | Meat-bone flour consumption per head during fattening period, grams | 133.9 | - | - |
| 8 | Feather protein supplement consumption per head during fattening period, grams | - | 172.4 | 236.3 |
| 9 | Fish flour savings per head during fattening period, grams | | 174.1 | 156.1 |
| 10 | Meat-bone flour savings per head during fattening period, grams | | 133.9 | 133.9 |
| 11 | Cost reduction per 1 ton of meat owing to saved fish flour and meat-bone flour, in US dollars | | 90.0 | 82.8 |
| 12 | Additionally produced meat after feeding 1 ton of dry feather protein supplement, kg | | 438.0 | 695.0 |
| 13 | Quantity of possibly replaced fish flour by feeding 1 ton of feather protein supplement, ton | | 1.0 | 0.7 |

Thus, the implementation of the inventive method will enable:
- improve the use of internal resources at poultry factories (due to two-fold increase in protein digestibility);
- add feather keratin to the field of feeding;
- reduce the need in fish flour;
- improve the sanitary condition of animal-origin forages;
- reduce the process time and energy costs;
- improve ecological safety in shops engaged in poultry evisceration waste disposal.

### Industrial Applicability

This invention is industrially applicable and may be most successfully used at factories processing non-edible waste of livestock farming products. The inventive method may be implemented on any known equipment and does not require special tooling.

## Claims

1. A method for producing a forage supplement from keratin-containing stock, comprising heating and comminution of feedstock, its sterilization and drying, **characterized in that** stock with initial moisture content 35 - 95 % is used, the said stock being continuously fed to the channel of a mixer-comminutor where it is heated at a pressure ranging from 0.4 to 10.0 MPa and stock temperature ranging from 60°C to 120°C, with subsequent hydrothermal treatment of stock at a temperature ranging from 150°C to 250°C for 5 to 300 seconds at simultaneous fine comminution and abrasion, wherein the processes of fine comminution and hydrolysis of keratin are combined and carried out in a thin layer with a thickness up to 20 millimeters, the processed stock is then taken out to an atmospheric pressure area.

## Patentansprüche

1. Verfahren zur Herstellung eines Protein-Futtermittelergänzungstoffs aus einem keratinhaltigen Rohmaterial, das sowohl Heizung und Vermahlung des Futterrohmaterials, als auch seine Sterilisierung und Trocknung enthält, **dadurch gekennzeichnet, dass** es ein Rohmaterial mit ursprünglichem Feuchtigkeitsgehalt von 35 bis 95 % verwendet wird, wobei dieses Rohmaterial der Rinne eines Mühle-Mischers zugefürt wird, wo es unter einem Druck von 0,4 bis 10,0 MPa erwärmt wird und die Temperatur des Rohmaterials von 60 bis 120 °C ist, mit einer folgenden hydrothermalen Behandlung des Rohmaterials mit Temperatur im Bereich von 150 bis 250 °C für eine Dauer von 5 bis 300 Sekunden gleichzeitig mit Feinzerkleinerung und Abrasion, wo die Feinzerkleinerungs- und Hydrolysen-Prozesse für das Keratin kombiniert und in einer dünnen Schicht mit Dicke bis 20 Millimeter verwirklicht werden, wonach das behandelte Rohmaterial zu einer Zone mit Atmosphärendruck herausgebracht wird.

## Revendications

1. Procédé de production d'un complément protéine du fourrage à partir d'une matière première contenant de la kératine, ledit procédé comprenant le chauffage et le broyage de la matière première alimentaire, sa stérilisation et son séchage, **caractérisé en ce qu'**on utilise une matière première d'un taux d'humidité initial entre 35% et 95%, ladite matière première étant alimentée continuement à la goulotte d'un mélangeur-moulin, dans lequel elle est chauffée sous une pression étant comprise entre 0,4 et 10,0 MPa et la température de la matière première varie entre 60 et 120°C, avec un traitement hydrothermal suivant de la matière première à une température variant de 150 à 250 °C pendant 5 à 300 secondes au cours d'un affinage et une abrasion simultanés, où les processus d'affinage et d'hydrolyse de la kératine sont combinés et réalisés dans une couche mince dont l'épaisseur peut atteindre 20 millimètres, après quoi la matière première traitée est transférrée en un endroit à la pression atmosphérique.
